# EUROPÄISCHE PATENTSCHRIFT

(11) **EP 0 803 399 B1**
(45) Veröffentlichungstag und Bekanntmachung des Hinweises auf die Patenterteilung: **24.10.2001**
(21) Anmeldenummer: 97106715.2
(22) Anmeldetag: 23.04.1997
(51) Int. Cl.: B60N 2/42, B60R 22/46

(54) **Fahrzeugsitz mit integriertem Gurtstraffer**
Vehicle seat with integrated belt tensioner
Siège de véhicule avec tendeur de ceinture intégré

(30) Priorität: 06.02.1997 DE 29702072 U; 23.04.1996 DE 29607362 U; 06.05.1996 DE 29608213 U
(43) Veröffentlichungstag der Anmeldung: 29.10.1997
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Kitzhofer, Thomas, Dipl.-Ing.

(56) Entgegenhaltungen:
- DE-A- 3 131 637
- DE-U- 8 812 852
- FR-A- 2 491 647
- US-A- 5 308 148

## Beschreibung

Die Erfindung betrifft einen Fahrzeugsitz mit einem Sitzrahmen, einem Sitzteil, das eine Seitenwand aufweist, einem Gurtstraffer, der an die Seitenwand angrenzt, wobei der Gurtstraffer ein Rohr, einen im Rohr angeordneten Kolben sowie ein Antriebsmittel zum Verschieben des Kolbens im Rückhaltefall und ein Verbindungselement aufweist, das der Verbindung des Kolbens mit dem Sicherheitsgurt dient, wobei das Rohr auf zumindest einem Teil seiner Längserstreckung quer dazu gekrümmt ist.

Bislang übliche Fahrzeugsitze, an denen ein Gurtstraffer befestigt ist, erfordern einen relativ großen Bauraum, da das Rohr als Teil einer Kolben-Zylindereinheit relativ lang ist und seitlich vom Sitz absteht. Hinzu kommt, daß der Gurtstraffer so eingebaut sein muß, daß im Rückhaltefall eine möglichst lineare Krafteinleitung vom Sicherheitsgurt in Richtung Kolben erreicht wird. Diese Anforderung reduziert die Einbaumöglichkeiten des Gurtstraffers.

Aus der DE 31 31 637 ist ein Rückstrammer für einen Gurtaufroller bekannt, bei dem eine Kolben-Zylindereinheit ein gekrümmtes Rohr umfaßt. Das gekrümmte Rohr ist jedoch nicht am Fahrzeugsitz, sondern an schwer zugänglichen Stellen im Fahrzeug, beispielsweise hinter der Lehne der Rücksitzbank angeordnet und am Fahrzeugaufbau befestigt.

Ein neben einem Fahrzeugsitz angeordneter Gurtstraffer ist in der gattungsbildenden DE 88 12 852 beschrieben. Die Straffung erfolgt mechanisch durch Federkraft. Eine bewegliche Sperrplatte sorgt in Zusammenwirkung mit entsprechenden Zähnen für eine Arretierung nach der Straffung. Aufgrund der Funktionsweise dieses Sperrmechanismus ist nur der Teil des Strafferrohres gekrümmt gestaltbar, in dem sich die Sperrplatte nicht bewegt.

Die Erfindung schafft einen Fahrzeugsitz mit integriertem Gurtstraffer, wobei der Gurtstraffer den Gegebenheiten im Fahrzeug angepaßt werden kann und vom Fahrzeugsitz nur noch geringfügig seitlich vorsteht. Dies wird bei einem Fahrzeugsitz mit den Merkmalen des Anspruchs 1 erreicht. Durch die Krümmung des Rohres kann der Gurtstraffer an den Verlauf der Seitenwand des Fahrzeugsitzes optimal angepaßt werden, weshalb der Gurtstraffer, ohne daß der Straffweg gegenüber bislang bekannten Gurtstraffern verringert werden würde, relativ klein baut. Der Fahrzeugsitz und der daran angebrachte Gurtstraffer ergeben eine optisch geschlossene Einheit. Dem optimalen Verlauf des Rohres im Wege stehende Teile lassen sich durch Krümmen des Rohres umgehen, ohne daß dies auf Kosten des Straffweges geht, da sich der Kolben auch in dem gekrümmten Teil des Rohres verschieben läßt.

Gemäß einer bevorzugten Ausführungsform erstreckt sich das Rohr sogar über einen Großteil seiner Länge bis unterhalb des Fahrzeugsitzes, wo mehr Bauraum zur Befestigung des Rohres zur Verfügung steht.

Um stärkere Krümmungsradien zu ermöglichen, ist es ferner vorteilhaft, wenn der Kolben im Bereich eines axialen Endes mit wenigstens einer ringförmigen, eine geringe axiale Erstreckung aufweisenden Führungsfläche an dem Rohr innenseitig anliegt. Im Bereich seiner gegenüberliegenden Enden sollte er so radial vom Rohr beabstandet sein, daß eine Längsverschiebung des Kolbens möglich ist. Wenn eine Führungsfläche mit geringer axialer Erstreckung vorgesehen ist, kann sich der Kolben ohne zu verklemmen im Rohr verschieben. Die leichte Verschiebbarkeit des Kolbens läßt sich dadurch steigern, daß er eine elastisch nachgiebige Dichtung aufweist, die die Führungsfläche umfaßt. Die Nachgiebigkeit kann durch eine geeignete Materialwahl (Kunststoff oder Leichtmetall) und/oder die konstruktive Ausführung der Dichtung erreicht werden.

Vorteilhafterweise ist das Verbindungselement ein am Kolben befestigtes Zugseil, welches stirnseitig aus dem Rohr austritt. Die stirnseitige Öffnung des Rohres wird durch ein Führungselement mit einer Durchtrittsöffnung geschlossen, durch welche sich das Zugseil erstreckt. Das Führungselement hat damit eine Doppelfunktion, indem es der Abdichtung des Rohrinnenraums und der Führung des Zugseils dient. Damit das Zugseil an der Kante am Ende der Durchtrittsöffnung im Rückhaltefall nicht scheuert und dadurch beschädigt wird, erweitert sich die Durchtrittsöffnung nach außen hin.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1a eine Längsschnittansicht durch den beim erfindungsgemäßen Fahrzeugsitz vorgesehenen Gurtstraffer;
Fig. 1b eine Längsschnittansicht durch den Gurtstraffer gemäß einer anderen Ausgestaltung;
Fig. 2 eine vergrößerte Längsschnittansicht des Gurtstraffers im Bereich des Kolbens, wobei die linke und die rechte Hälfte der Ansicht unterschiedliche Varianten des Kolbens zeigen;
Fig. 3 eine Frontansicht eines erfindungsgemäßen Fahrzeugsitzes mit einem daran befestigten Gurtstraffer gemäß einer ersten Ausführungsform;
Fig. 4 eine Seitenansicht des erfindungsgemäßen Fahrzeugsitzes mit einem daran befestigten Gurtstraffer gemäß einer zweiten Ausführungsform; und
Fig. 5 eine Vorderansicht des erfindungsgemäßen Fahrzeugsitzes mit einem daran befestigten Gurtstraffer gemäß einer dritten Ausführungsform.

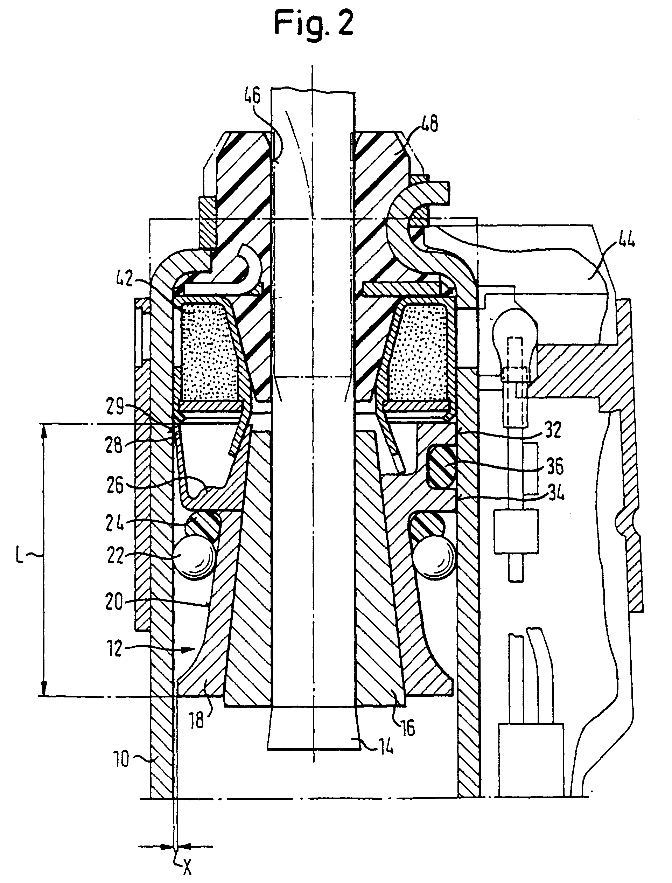

In Fig. la ist ein Gurtstraffer 1 für einen Sicherheitsgurt gezeigt, der ein Rohr 10, einen darin verschiebbar angeordneten Kolben 12 sowie ein an einem Ende am Kolben 12 und am anderen Ende an einem Gurtschloß (nicht gezeigt) befestigtes Zugseil 14 aufweist, welches als Verbindungselement zwischen den beiden Teilen wirkt. Als Antriebsmittel für den sich im Rückhaltefall innerhalb des Rohres 10 bewegenden Kolben 12 dient ein pyrotechnischer Treibsatz, dessen Lage im Zusammenhang mit Fig. 2 später noch näher erläutert wird. Das Rohr 10 ist in seiner gesamten Längserstreckung quer dazu und in einer Ebene gekrümmt. R bezeichnet dabei den Krümmungsradius. Je nach zur Verfügung stehendem Bauraum im Fahrzeug kann das Rohr 10 jedoch auch nur im oberen Anschnitt gekrümmt sein, wie es mit unterbrochenen Linien angedeutet ist. In letzterer Ausführungsform hat das Rohr 10 einen unteren, nicht gekrümmten und einen oberen, gekrümmten Abschnitt. Der Krümmungsradius R muß so auf die Kolbengeometrie und die Rohrgeometrie abgestimmt sein, daß der Kolben 12 innerhalb des Rohres 10 beweglich ist. Dazu ist es erforderlich, daß der Kolben 12 keine, in Axialrichtung gesehen, zu lange Führungsfläche oder zu weit auseinanderliegende Führungsflächen aufweist, mit der er an der Innenseite des Rohres 10 anliegt, was zum Klemmen des Kolbens 12 im Rohr 10 führen würde.

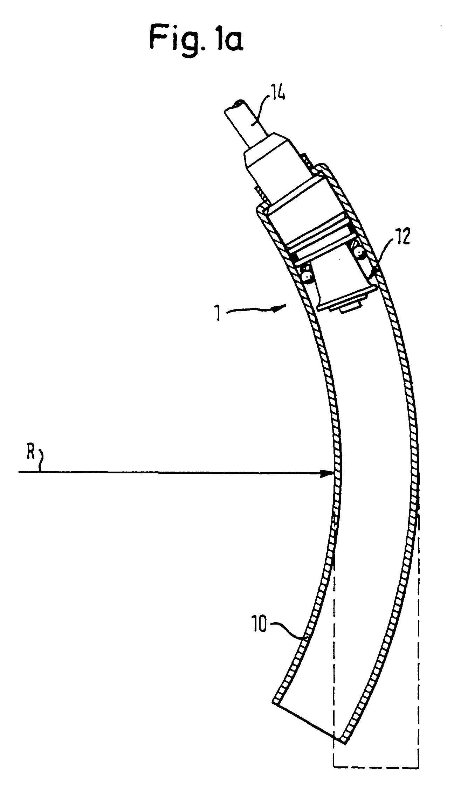

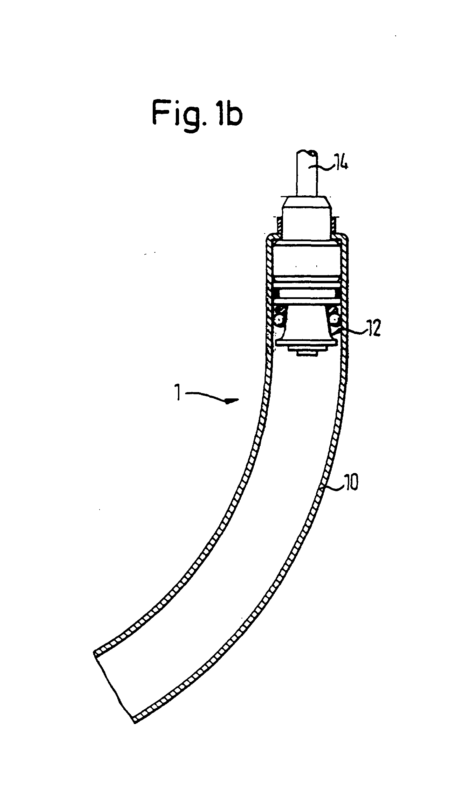

Fig. 1b zeigt eine weitere Ausführungsform des Gurtstraffers, dessen Rohr 10 am gurtschloßseitigen Ende einen nicht gekrümmten Abschnitt aufweist, der etwa so lang wie der Kolben 12 ist. Durch diese geradlinige Ausgestaltung des Rohres 10 im Bereich des Austritts des Zugseils 14 wird das Zugseil 14 exakt geführt, und die Reibungskräfte zwischen dem Zugseil 14 und der später noch näher erläuterten Austrittsöffnung aus dem Rohr 10 können reduziert werden.

In Fig. 2 ist anhand von zwei Varianten dargestellt, wie der Kolben 12 ausgebildet sein kann, um in Rohren mit relativ kleinen Krümmungsradien verschoben werden zu können. Der Kolben 12 ist aus mehreren Teilen zusammengesetzt, nämlich einem kegelförmigen Halteteil 16 für das Zugseil 14 sowie ein das Halteteil 16 umgebendes Teil 18. Das Teil 18 hat eine konische Außenfläche 20, an der mehrere Sperrkörper 22 in Form von Kugeln anliegen. Die Lage der Sperrkörper 22, die in der in Fig. 2 gezeigten Ausgangsstellung auch an der Innenwand des Rohres 10 anliegen, ist ferner durch einen elastischen Ring 24 festgelegt. Bei der in Fig. 2 auf der linken Hälfte gezeigten Ausführungsform grenzt eine Dichtung 26 an das rohrförmige Teil 18 an. Die Dichtung 26 ist ein nach oben offener Rotationskörper mit U-förmigem Querschnitt. Ein äußerer Mantelabschnitt der Dichtung 26 verläuft bis zu seinem freien Rand 28 konisch nach außen. Im Bereich des freien Randes 28 ist eine axial kurze umlaufende Führungsfläche 29 vorgesehen, die an der Innenseite des Rohres 10 anliegt. Da der Mantelabschnitt aufgrund seiner geringen Dicke und des verwendeten Leichtmetalls elastisch nachgiebig ist, kann die Führungsfläche 29 nicht dazu führen, daß sich der Kolben 12 im gekrümmten Rohr 10 verklemmt.

In der in der rechten Hälfte von Fig. 2 gezeigten Ausführungsform ist die Führungsfläche in axialer Richtung länger und wird durch zwei umlaufende Anlageflächen 32, 34, die Dichtungen darstellen, gebildet, zwischen denen eine zusätzliche Ringdichtung 36 vorhanden ist.

Das der Dichtung 26 und der Ringdichtung 36 gegenüberliegende Ende des Kolbens 12 liegt nicht an der Innenseite des Rohres 10 an, sondern ist von dieser beabstandet, wie durch den Spalt X dargestellt. Die äußere Mantelfläche des Teils 18 kann in diesem Bereich zwar bei der Bewegung innerhalb des Rohres 10 an deren Innenwand anstoßen und dabei als Führungsfläche dienen, das Verhältnis des Spaltes X zum maximalen Abstand L der Führungsflächen ist jedoch so auf den Krümmungsradius des Rohres 10 abgestimmt, daß ein Klemmen des Kolbens 12 nicht auftreten kann.

Eine im Bereich des oberen Endes des Rohres 10 vorgesehene Kammer ist mit einem pyrotechnischen Treibsatz 42 gefüllt, der über einen elektrischen Zünder 44 aktiviert werden kann. An die Kammer schließt sich ein Führungselement 48 an, das das Rohr 10 stirnseitig gasdicht abschließt. Das Zugseil 14 erstreckt sich durch eine Durchtrittsöffnung 46 im Führungselement 48, die sich nach außen hin erweitert, damit keine scharfe Kante vorhanden ist, an der das Zugseil 14 beschädigt werden könnte. Wenn das Zugseil 14 schräg aus dem Rohr 10 herauslaufen muß, kann die Mittelachse der Durchtrittsöffnung 46 auch gekrümmt sein, wie mit unterbrochenen Linien angedeutet ist.

Nach dem erfolgten Straffvorgang verhindern die am konischen Außenabschnitt 20 anliegenden Sperrkörper 22 ein Zurückziehen des Kolbens 12. Wenn zudem noch eine plastische Verformung des Rohres 10 oder des Ringes 18 durch die Sperrkörper 22 erlaubt wird, kann dies zu einer Kraftbegrenzung für die maximalen im Gurt auftretenden Kräfte führen.

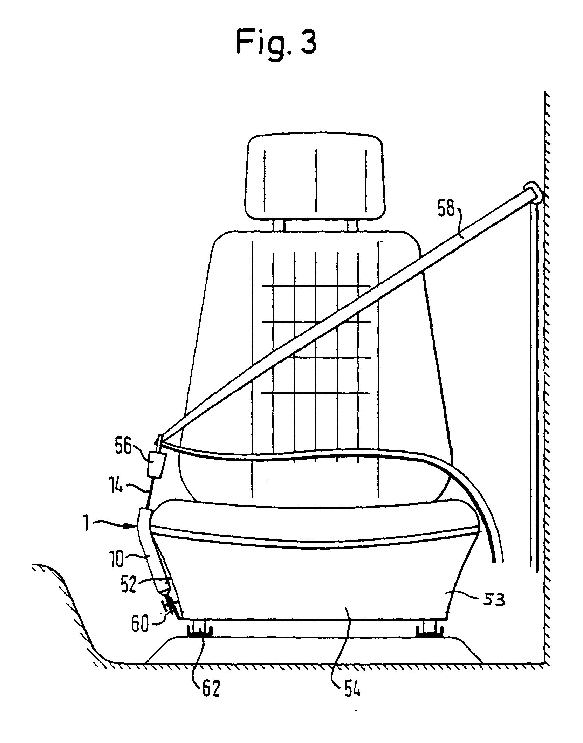

In Fig. 3 ist ein Gurtstraffer 1 dargestellt, der in diesem Fall als Schloßstraffer ausgebildet, an einem erfindungsgemäßen Fahrzeugsitz 54 befestigt ist und mit ihm eine Einheit bildet. Obwohl der durch den Gurtstraffer 10 mögliche Straffweg sehr groß ist, ist der für den Gurtstraffer erforderliche Bauraum relativ gering. Der Gurtstraffer 1 steht ferner gegenüber dem Fahrzeugsitz kaum vor. Das Rohr 10 ist einer Seitenwand 52 des Sitzteils 53 des Fahrzeugsitzes 54 exakt angepaßt, so daß es sich förmlich an die Kontur der Seitenwand 52 anschmiegt. Im oberen Drittel des Rohres 10 weist diese eine Krümmung auf, die dazu führt, daß das am Zugseil 14 befestigte Gurtschloß 56 geringfügig in Richtung Fahrzeugsitz 54 geneigt und dem Verlauf des Sicherheitsgurtes 58 gut angepaßt ist. Am unteren Ende des Rohres 10 ist die Rohrwandung zusammengepreßt und bildet einen Flansch 60, mit dem das Rohr 10, gegebenenfalls schwenkbar, am Sitzrahmen 62 angeschraubt ist. Der Gurtstraffer 1 kann an dem Fahrzeugsitz 54 vor dem Einbau des Sitzes in das Fahrzeug montiert werden, wenn die Zugänglichkeit für die Befestigung des Gurtstraffers 1 nicht eingeschränkt ist. Aufgrund der Anpassung des Gurtstraffers 1 an die Kontur der Seitenwand 52 des Sitzteils 53 kann auch die Gefahr des Hängenbleibens des Fahrzeuginsassen am Gurtstraffer 1 und des unbeabsichtigten Verschiebens des Gurtstraffers 1 reduziert werden.

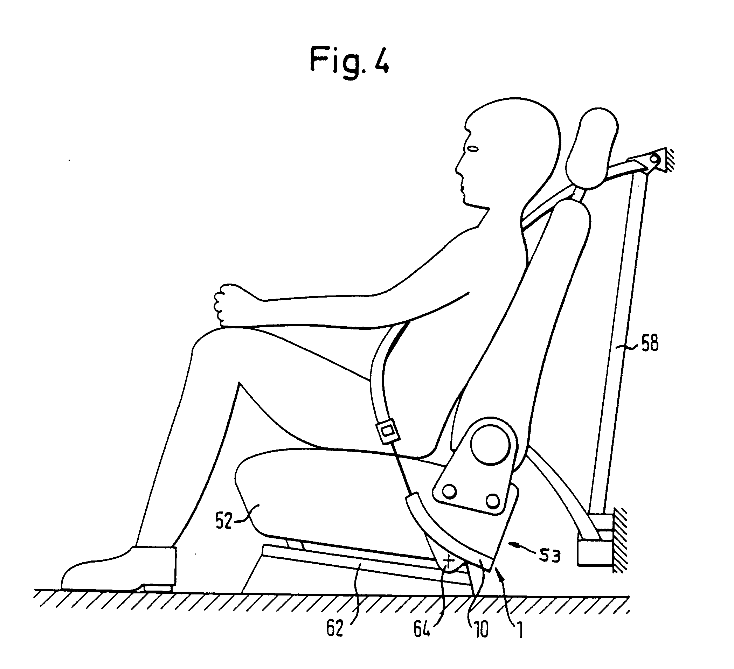

In der in Fig. 4 dargestellten Ausführungsform ist an der Außenwand des Rohres 10 ein Flansch 64 angeschweißt, der zur Befestigung des Rohres 10 am Sitzrahmen 62 dient. Das Rohr 10 ist in Seitenansicht einerseits schräg aufwärts und andererseits schräg auswärts und damit in zwei Ebenen gebogen. Das Rohr 10 erstreckt sich vom hinteren, unteren Ende des Sitzteils 53 aus, in der Seitenansicht gesehen, längs der Seitenwand 52 bogenförmig nach vorn und nach oben. Bei dieser Ausführungsform ergibt sich eine optimale Anpassung des Verlaufs des Rohres 10 an den Verlauf des Sicherheitsgurtes 58.

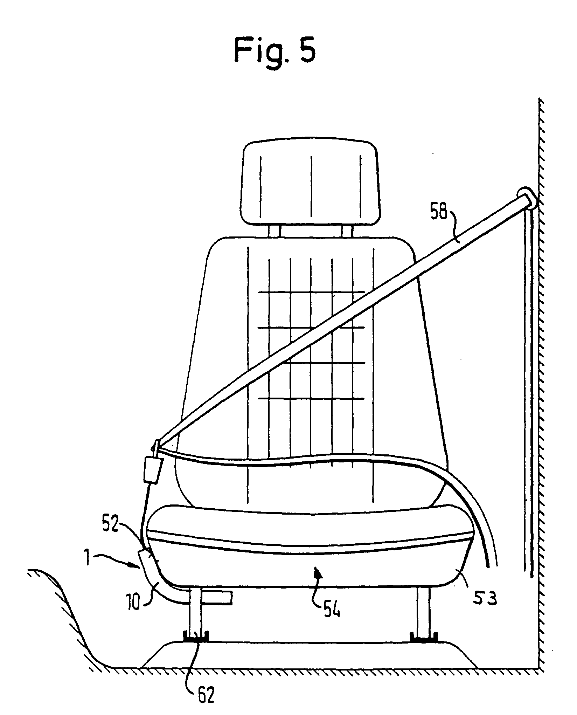

In der in Fig. 5 dargestellten Ausführungsform des Gurtstraffers 1 erstreckt sich das Rohr 10, an die Kontur der Seitenwand 52 angepaßt, bis unter den Sitz 54, wo es am Sitzrahmen 62 befestigt ist. Diese Ausführungsform hat den Vorteil, daß das Rohr 10 und damit der Straffweg sehr lang sein können, ohne daß dies zu Unterbringungsproblemen im Fahrzeug führt. Das Rohr ist unterhalb des Sitzteils 53 am Sitzrahmen 62 angeschraubt. Je nach Länge des Rohres 10 und des Zugseils kann sich nur ein geringer oder ein großer Teil des Rohres 10 bis unterhalb des Fahrzeugsitzes 54 erstrecken.

## Patentansprüche

1. Fahrzeugsitz, mit einem Sitzrahmen (62), einem Sitzteil (53), das eine Seitenwand (52) aufweist, einem Gurtstraffer (1), der an die Seitenwand (52) angrenzt, wobei der Gurtstraffer (1) ein Rohr (10), einen im Rohr (10) angeordneten Kolben (12) sowie ein Antriebsmittel zum Verschieben des Kolbens (12) im Rückhaltefall und ein Verbindungselement aufweist, das der Verbindung des Kolbens (12) mit dem Sicherheitsgurt dient, wobei das Rohr (10) auf zumindest einem Teil seiner Längserstreckung quer dazu gekrümmt ist, **dadurch gekennzeichnet, daß** das Rohr (10) am Sitzrahmen (62) befestigt ist und seine Krümmung in einem Bereich des Rohres (10), der längs der Seitenwand (52) verläuft, im wesentlichen der Außenkontur der Seitenwand (52) angepaßt ist, **daß** der Kolben (12) zwischen seinen axialen Enden eine konische Außenfläche (20) mit daran anliegenden Sperrkörpern (22) aufweist, welche eine Bewegung des Kolbens (12) entgegengesetzt zur Straffrichtung weitgehend verhindern, und **daß** der Krümmungsradius (R) des Rohres (10) so auf die Kolbengeometrie und die Rohrgeometrie abgestimmt ist, daß sich der Kolben (12) im gekrümmten Bereich des Rohres (10) bewegen kann.

2. Fahrzeugsitz nach Anspruch 1, **dadurch gekennzeichnet, daß** das Rohr (10) einen radial von ihm abstehenden Befestigungsflansch (64) zur Arretierung des Rohres (10) am Sitzrahmen (62) aufweist.

3. Fahrzeugsitz nach Anspruch 1 oder 2, **dadurch gekennzeichnet, daß** das Rohr (10) im eingebauten Zustand ein unteres Ende aufweist und das Ende einen in Längsrichtung abstehenden Befestigungsflansch (60) zur Arretierung des Rohres (10) aufweist.

4. Fahrzeugsitz nach Anspruch 3, **dadurch gekennzeichnet, daß** der Befestigungsflansch (60) durch Zusammenpressen des Rohres (10) an seinem unteren Ende gebildet wird.

5. Fahrzeugsitz nach einem der vorstehenden Ansprüche, **dadurch gekennzeichnet, daß** sich das Rohr (10) vom hinteren, unteren Ende des Sitzteils (53) längs der Seitenwand bogenförmig nach vorne und nach oben erstreckt.

6. Fahrzeugsitz nach einem der vorstehenden Ansprüche, **dadurch gekennzeichnet, daß** der Gurtstraffer (1) als Schloßstraffer ausgebildet ist.

7. Fahrzeugsitz nach einem der vorstehenden Ansprüche, **dadurch gekennzeichnet, daß** sich das Rohr (10) bis unter den Fahrzeugsitz (54) erstreckt.

8. Fahrzeugsitz nach Anspruch 7, **dadurch gekennzeichnet, daß** sich das Rohr (10) über den Großteil seiner Länge unterhalb des Fahrzeugsitzes (54) erstreckt.

9. Fahrzeugsitz nach Anspruch 7 oder 8, **dadurch gekennzeichnet, daß** das Rohr (10) unterhalb des Fahrzeugsitzes (54) am Sitzrahmen befestigt ist.

10. Fahrzeugsitz nach einem der vorstehenden Ansprüche, **dadurch gekennzeichnet, daß** der Kolben (12) im Bereich eines axialen Endes mit wenigstens einer umlaufenden, eine geringe axiale Erstreckung aufweisenden Führungsfläche (29) an dem Rohr (10) innenseitig anliegt und im Bereich seines gegenüberliegenden Endes vom Rohr (10) radial ausreichend beabstandet ist, um eine Längsverschiebung des Kolbens (12) im Rohr (10) zu ermöglichen.

11. Fahrzeugsitz nach Anspruch 10, **dadurch gekennzeichnet, daß** der Kolben (12) eine elastisch nachgiebige Dichtung (26) aufweist, die die Führungsfläche (29) umfaßt.

12. Fahrzeugsitz nach Anspruch 10 oder 11, **dadurch gekennzeichnet, daß** die Dichtung (26) ein in Richtung zum Antriebsmittel offener Rotationskörper ist, mit einem U-förmigen Querschnitt und einem sich zum Antriebsmittel hin konisch erweitenden elastisch nachgiebigen Mantelabschnitt, der einen freien Rand (28) aufweist und im Bereich des freien Randes (28) am Rohr (10) anliegt.

13. Fahrzeugsitz nach einem der vorstehenden Ansprüche, **dadurch gekennzeichnet, daß** das Verbindungselement ein Zugseil (14) ist und daß das Rohr (10) an einer Stirnseite ein an ihm befestigtes Führungselement (48) für das Zugseil (14) aufweist, das sich durch eine nach außen erweiternde Durchtrittsöffnung (46) im Führungselement (48) erstreckt.

14. Fahrzeugsitz nach Anspruch 13, **dadurch gekennzeichnet, daß** die Durchtrittsöffnung (46) eine gekrümmte Mittelachse aufweist.

15. Fahrzeugsitz nach einem der vorstehenden Ansprüche, **dadurch gekennzeichnet, daß** das Rohr (10) im Bereich seines axialen Endes, aus welchem das Verbindungselement stirnseitig austritt, nicht gekrümmt ist.

16. Fahrzeugsitz nach Anspruch 15, **dadurch gekennzeichnet, daß** der nicht gekrümmte Bereich des Rohres (10) in etwa so lang wie der Kolben (12) ist.

## Claims

1. A vehicle seat comprising a seat frame (62), a seat part (53) having a side wall (52), a belt tensioner (1) adjoining the side wall (52), the belt tensioner (1) comprising a tube (10), a piston (12) arranged in the tube (10) as well as a drive means for displacing the piston (12) in the case of restraint, and a connection element which serves to connect the piston (12) with the safety belt, the tube (10) being curved across at least part of its longitudinal extent transversely thereto, **characterized in that** the tube (10) is fastened to the seat frame (62) and its curvature, in a region of the tube (10) that runs along the side wall (52), is substantially adapted to the outer contour of the side wall (52), **that** the piston (12) comprises a conical outer surface (20) between its axial ends with locking bodies (22) lying thereagainst which largely prevent a movement of the piston (12) in the direction opposite to the tensioning direction, and **that** the radius (R) of curvature of the tube (10) is adapted to the piston geometry and the tube geometry in such a manner that the piston (12) is able to move in the curved region of the tube (10).

2. The vehicle seat according to claim 1, **characterized in that** the tube (10) has a fastening flange (64) projecting radially therefrom to arrest the tube (10) on the seat frame (62).

3. The vehicle seat according to claim 1 or 2, **characterized in that** in the installed state the tube (10) has a lower end which comprises a fastening flange (60) projecting in longitudinal direction to arrest the tube (10).

4. The vehicle seat according to claim 3, **characterized in that** the fastening flange (60) is formed by pressing the tube (10) flat at its lower end.

5. The vehicle seat according to according to any of the preceding claims, **characterized in that** the tube (10) extends from the rear, lower end of the seat part (53) along the side wall in a bow-shaped manner towards the front and upwards.

6. The vehicle seat according to any of the preceding claims, **characterized in that** the belt tensioner (1) is embodied as a buckle tensioner.

7. The vehicle seat according to any of the preceding claims, **characterized in that** the tube (10) extends to below the vehicle seat (54).

8. The vehicle seat according to claim 7, **characterized in that** the tube (10), across the majority of its length, extends below the vehicle seat (54).

9. The vehicle seat according to claim 7 or 8, **characterized in that** the tube (10) is fastened to the seat frame below the vehicle seat (54).

10. The vehicle seat according to any of the preceding claims, **characterized in that** the piston (12), in the region of an axial end, lies on the inner side against the tube (10) with at least one surrounding guide surface (29) having a small axial extent, and is sufficiently spaced apart radially from the tube (10) in the region of its opposite end in order to enable a longitudinal displacement of the piston (12) in the tube (10).

11. The vehicle seat according to claim 10, **characterized in that** the piston (12) has an elastically flexible seal (26) which embraces the guide surface (29).

12. The vehicle seat according to claim 10 or 11, **characterized in that** the seal (26) is a rotational solid which is open towards the drive means, comprising a U-shaped cross-section and an elastically flexible covering section widening conically towards the drive means, which covering section has a free rim (28) and lies against the tube (10) in the region of the free rim (28).

13. The vehicle seat according to any of the preceding claims, **characterized in that** the connection element is a traction cable (14) and that the tube (10) on one end face has secured to it a guide element (48) for the traction cable (14) extending through an outwardly widening through opening (46) in the guide element (48).

14. The vehicle seat according to claim 13, **characterized in that** the through opening (46) has a curved central axis.

15. The vehicle seat according to any of the preceding claims, **characterized in that** the tube (10) is not curved in the region of its axial end from which the connection element emerges on the end face.

16. The vehicle seat according to claim 15, **characterized in that** the region of the tube (10) which is not curved has approximately the same length as the piston (12).

## Revendications

1. Siège de véhicule, comportant un cadre de siège (62), une partie de siège (53), qui présente une paroi latérale (52), un tendeur de ceinture (1) qui est contigu à la paroi latérale (52), le tendeur de ceinture (1) présentant un tube (10), un piston (12) agencé dans le tube (10) ainsi qu'un moyen d'entraînement pour déplacer le piston (12) en cas de retenue, ainsi qu'un élément de liaison qui sert à relier le piston (12) à la ceinture de sécurité, le tube (10) étant incurvé sur au moins une partie de son étendue longitudinale perpendiculairement à celle-ci, **caractérisé en ce que** le tube (10) est fixé sur le cadre de siège (62) et sa courbure est adaptée, dans une zone du tube (10) qui s'étend le long de la paroi latérale (52), sensiblement au contour extérieur de la paroi latérale (52), **en ce que** le piston (12) présente entre ses extrémités axiales une surface extérieure (20) conique avec des corps de blocage (22) adjacents, qui empêchent dans une large mesure un mouvement du piston (12) en sens opposé au sens de tension, et **en ce que** le rayon de courbure (R) du tube (10) est adapté à la géométrie du piston et à la géométrie du tube de telle sorte que le piston (12) peut se déplacer dans la zone incurvée du tube (10).

2. Siège de véhicule selon la revendication 1, **caractérisé en ce que** le tube (10) présente une bride de fixation (64) qui fait saillie radialement à partir de celui-ci, pour bloquer le tube (10) sur le cadre de siège (62).

3. Siège de véhicule selon la revendication 1 ou 2, **caractérisé en ce que** le tube (10) présente, à l'état monté, une extrémité inférieure et **en ce que** l'extrémité présente une bride de fixation (60) qui sert à bloquer le tube (10).

4. Siège de véhicule selon la revendication 3, **caractérisé en ce que** la bride de fixation (60) est formée par compression du tube (10) à son extrémité inférieure.

5. Siège de véhicule selon l'une quelconque des revendications précédentes, **caractérisé en ce que** le tube (10) s'étend depuis l'extrémité postérieure inférieure de la partie de siège (53) le long de la paroi latérale, en forme d'arc vers l'avant et vers le haut.

6. Siège de véhicule selon l'une quelconque des revendications précédentes, **caractérisé en ce que** le tendeur de ceinture (1) est réalisé sous forme de tendeur de fermoir.

7. Siège de véhicule selon l'une quelconque des revendications précédentes, **caractérisé en ce que** le tube (10) s'étend jusqu'en dessous du siège de véhicule (54).

8. Siège de véhicule selon la revendication 7, **caractérisé en ce que** le tube (10) s'étend sur la majeure partie de sa longueur en dessous du siège de véhicule (54).

9. Siège de véhicule selon la revendication 7 ou 8, **caractérisé en ce que** le tube (10) est fixé en dessous du siège de véhicule (54) sur le cadre de siège.

10. Siège de véhicule selon l'une quelconque des revendications précédentes, **caractérisé en ce que** le piston (12) repose dans la zone d'une extrémité axiale sur le tube (10) du côté intérieur, par au moins une surface de guidage (29) périphérique qui présente une faible étendue axiale et, dans la zone de son extrémité opposé, il est à une distance radialement suffisante du tube (10) pour permettre un déplacement longitudinal du piston (12) dans le tube (10).

11. Siège de véhicule selon la revendication 10, **caractérisé en ce que** le piston (12) présente une garniture d'étanchéité (26) flexible élastiquement, qui entoure la surface de guidage (29).

12. Siège de véhicule selon l'une la revendication 10 ou 11, **caractérisé en ce que** la garniture d'étanchéité (26) est un corps de rotation ouvert en direction du moyen d'entraînement, avec une section transversale en forme de U et avec une section de son enveloppe qui est flexible élastiquement qui va en s'élargissant de façon conique en direction du moyen d'entraînement et qui présente un bord libre (28) et repose dans la zone du bord libre (28) sur le tube (10).

13. Siège de véhicule selon l'une quelconque des revendications précédentes, **caractérisé en ce que** l'élément de liaison est un câble de traction (14) et **en ce que** le tube (10) présente sur une face frontale un élément de guidage (48), fixé sur celui-ci, pour le câble de traction (14), qui s'étend dans l'élément de guidage (48) à travers une ouverture de passage (46), s'élargissant vers l'extérieur.

14. Siège de véhicule selon la revendication 14, **caractérisé en ce que** l'ouverture de passage (46) présente un axe médian incurvé.

15. Siège de véhicule selon l'une quelconque des revendications précédentes, **caractérisé en ce que** le tube (10) n'est pas incurvé dans la zone de son extrémité axiale, hors de laquelle sort l'élément de liaison du côté frontal.

16. Siège de véhicule selon la revendication 15, **caractérisé en ce que** la zone du tube, qui n'est pas incurvée, est approximativement aussi longue que le piston (12).
